# EUROPEAN PATENT SPECIFICATION

(11) **EP 4 235 901 B1**
(45) Date of publication and mention of the grant of the patent: **29.07.2026**
(21) Application number: 22893992.2
(22) Date of filing: 28.10.2022
(51) Int. Cl.: H01M 10/0583, H01M 10/0585, H01M 10/052, H01M 4/62, H01M 10/04, H01M 10/0525, H01M 50/46, H01M 4/13

(54) **ELECTRODE ASSEMBLY INCLUDING COATING LAYER FORMED ON OTHER SURFACE OF SINGLE-SIDED POSITIVE ELECTRODE AND A SECONDARY BATTERY COMPRISING THE SAME**
ELEKTRODENANORDNUNG MIT EINER AUF EINER ANDEREN OBERFLÄCHE EINER EINSEITIGEN POSITIVEN ELEKTRODE GEFORMTEN BESCHICHTUNGSSCHICHT UND SEKUNDÄRBATTERIE DAMIT
ENSEMBLE D'ÉLECTRODE COMPRENANT UNE COUCHE DE REVÊTEMENT FORMÉE SUR UNE AUTRE SURFACE D'ÉLECTRODE POSITIVE UNILATÉRALE ET BATTERIE SECONDAIRE LE COMPRENANT

(30) Priority: 16.11.2021 KR 20210157803; 27.10.2022 KR 20220140427
(43) Date of publication of application: 30.08.2023
(73) Proprietor: LG Energy Solution, Ltd., Seoul 07335 (KR)
(72) Inventor: LEE, Jung Pil, Daejeon 34122 (KR); RYU, Jihoon, Daejeon 34122 (KR); KIM, Dong Kyu, Daejeon 34122 (KR)
(74) Representative: Plasseraud IP
(86) International application number: PCT/KR2022/016638
(87) International publication number: WO 2023/090684

(56) References cited:
- EP-A1- 2 725 636
- JP-A- 2016 181 439
- KR-A- 20190 046 688
- KR-A- 20190 092 307
- KR-A- 20200 060 823
- KR-A- 20200 141 859
- KR-B1- 102 009 736
- KR-B1- 102 228 628
- US-A1- 2015 236 323

## Description

### [TECHNICAL FIELD]

This application claims the benefit of Korean Patent Application No. 10-2021-0157803 filed on November 16, 2021 and Korean Patent Application No. 10-2022-0140427 filed on October 27, 2022 with the Korean Intellectual Property Office.

The present disclosure relates to an electrode assembly including a coating layer formed on other side of single-sided positive electrode and a secondary battery including the same

### [BACKGROUND]

With the technology development and increased demand for mobile devices, demand for secondary batteries as energy sources has been rapidly increasing. Among such secondary batteries is a lithium secondary battery exhibiting a high energy density and operating voltage, a long cycle lifespan, and a low self-discharge rate, which is now commercialized and widely used.

Also, recently, as interest in environmental issues grows, studies are frequently conducted on an electric vehicle (EV), a hybrid electric vehicle (HEV), etc. which can replace a vehicle using fossil fuels such as a gasoline vehicle and a diesel vehicle, which are one of the main causes of air pollution. A lithium secondary battery having high energy density, discharge voltage and output stability is mainly studied and used as a power source for the electric vehicle (EV), the hybrid electric vehicle (HEV) and the like.

Such a lithium secondary battery is generally manufactured by stacking or winding electrodes of cathode and anode with a separator being interposed therebetween, and incorporating them together with an electrolyte solution in a battery case.

In recent years, the development of high-energy density batteries has been accelerated along with the increase in use, and accordingly, the outermost shell of the electrode assembly applies a single-sided positive electrode in which a positive electrode active material layer is formed only on one surface of a current collector.

However, when a single-sided positive electrode is applied, bending occurs in the electrode formed due to the difference in physical properties between the current collector and the positive electrode active material layer, and also the adhesive force between the current collector and the separator or separation film present in the outermost shell is decreased, which is disadvantageous in the continuous process, and the fixing force of the unit cells is reduced, which may cause safety problems.

Therefore, there is a need to develop a technology that can solve the above problems.

### [DETAILED DESCRIPTION OF THE INVENTION]

### [Technical Problem]

It is an object of the present disclosure to provide an electrode assembly that is improved in the bending of single-sided positive electrode, and in the adhesive force of outermost separator or separation film, and a secondary battery including the same

### [Technical Solution]

According to one embodiment of the present disclosure, there is provided an electrode assembly for a lithium secondary battery, in which:
at least one electrode located at the outermost shell of the electrode assembly is a single-sided positive electrode where an active material coating layer is formed only on one surface of a current collector facing an inner electrode with a separator being interposed therebetween, and
a coating layer containing 60% by weight or more of particulate super-engineering plastic polymer is formed on the other surface of the current collector of the single-sided positive electrode.

Wherein, the super-engineering plastic polymer may be at least one selected from the group consisting of polyetheretherketone(PEEK), polyphenylene sulfide(PPS), polyetherimide(PEI), polyethersulfone(PES), polyarylsulfone(PSU), polyamide-imide(PAI), polycarbonate(PC), polyphenylsulfone(PPSU) and polyimide(PI).

The super-engineering plastic polymer may have an average particle diameter (D50) of 50 nm to 20 *µ*m.

Also, the coating layer may contain 70% by weight or more of the super-engineering plastic polymer.

Furthermore, the coating layer may further comprise at least one selected from the group consisting of a polyvinylidene fluoride(PVDF) binder, a carboxymethylcellulose(CMC)-based binder, a polytetrafluoroethylene(PTFE)-based binder, a polyacrylonitrile(PAN)-based binder, and a polyethylene oxide (PEO)-based binder.

Moreover, the coating layer may have a thickness of 5 to 60% relative to the thickness of the positive electrode active material coating layer.

Meanwhile, the electrode assembly may be configured such that the single-sided positive electrode is formed on the whole of the outermost shells on both sides of the stacking direction.

Further, a separator or a separation film may be located on the outside of the single-sided positive electrode.

The electrode assembly may be of a stack-folding type in which one or more unit cells selected from the group consisting of a mono-cell, a bi-cell, and a full-cell are folded with a sheet-type separation film such that a positive electrode and a negative electrode are alternately stacked.

Alternatively, the electrode assembly may be of a stack-lamination type in which the unit cells selected from the group consisting of a mono-cell, a bi-cell, and a full-cell are stacked such that the positive electrode and the negative electrode are alternately stacked, and a separator is located and laminated on the outermost shell.

According to another embodiment of the present disclosure, there is provided a secondary battery comprising the above-mentioned electrode assembly.

### [BRIEF DESCRIPTION OF THE DRAWINGS]

Fig. 1 is a photograph of the positive electrode of Example 1 according to Experimental Example 2 after rolling;
Fig. 2 is a photograph of the positive electrode of Comparative Example 1 according to Experimental Example 2 after rolling; and
Fig. 3 is a photograph of the positive electrode of Comparative Example 3 according to Experimental Example 2 after rolling.

### [DETAILED DESCRIPTION OF THE EMBODIMENTS]

The embodiments described herein and the configurations shown in the drawings are only most preferable embodiments of the present disclosure and do not represent the entire present disclosure, so it should be appreciated that there may be various equivalents and modifications that can replace the embodiments and the configurations at the time at which the present application is filed, and the scope of the present invention is not limited to the embodiments described below, being defined by the appended set of claims.

According to one embodiment of the present disclosure, there is provided an electrode assembly for a lithium secondary battery, in which:
at least one electrode located at the outermost shell of the electrode assembly is a single-sided positive electrode where an active material coating layer is formed only on one surface of a current collector facing an inner electrode with a separator being interposed therebetween, and
a coating layer containing 60% by weight or more of particulate super-engineering plastic polymer is formed on the other surface of the current collector of the single-sided positive electrode.

Therefore, the present inventors conducted in-depth research and various experiments and as a result, confirmed that when a single-sided positive electrode is applied, there is a problem that bending occurs in the single-sided positive electrode due to the difference in physical properties between the current collector and the active material coating layer, and an adhesive force between the current collector and the outermost separator or separation film is not achieved as much as the active material coating layer is formed, and thus such an adhesion problem also occurs.

In this regard, the present inventors confirmed that when a coating layer containing a polymer is formed on the other surface of the current collector of the single-sided positive electrode, the problem of bending of the single-sided positive electrode or the problem of deterioration of adhesive force with the separator or separator film can be solved to a certain extent, but the type and shape of the polymer contained at this time affects the degree of solving these problems.

Specifically, first, the coating layer formed on the other surface of the single-sided positive electrode current collector must include a super-engineering plastic polymer.

Here, the super-engineering plastic polymer may be at least one selected from the group consisting of polyetheretherketone (PEEK), polyphenylene sulfide (PPS), polyetherimide (PEI), polyethersulfone (PES), polyarylsulfone (PSU), polyamide-imide (PAI), polycarbonate (PC), polyphenylsulfone (PPSU) and polyimide (PI).

Since the super-engineering plastic polymer is a very high-strength material and hardly deforms under pressure, it is effective in suppressing bending of the positive electrode intended in the present disclosure. When using other polymers having adhesiveness, it improves the adhesive force between the current collector and the separator, but it does not have sufficient strength and does not have the effect of improving the bending suppression of the positive electrode, or rather, physical deformation may occur, so that bending may become more serious, which is not preferable.

Further, second, the super-engineering plastic polymer must be in particulate form.

When the shape of the super-engineering plastic polymer is not in particulate form, there is not enough space for the polymer to physically deform during positive electrode rolling, which can thus reduce the effect of improving bending. In addition, in the case of super-engineering plastic polymers, it usually has a very high melting point or strong chemical resistance, which causes a problem in terms of cost in the process of manufacturing it in the form of a film because there are few suitable solvents. On the other hand, when the polymer is included in particulate form, not only the production is easy due to including a binder, but also it has the effect that can expect improvement of the adhesive force, and deformation can be made into the space between particles during application of a pressure, thereby improving stress and reducing bending, which is preferable.

In this case, the particulate super-engineering plastic polymer may have an average particle diameter (D50) of 50 nm to 200 *µ*m, and specifically, the average particle diameter (D50) may be 0.1 *µ*m to 10 *µ*m.

If the particle diameter is too large outside the above range, the adhesive force may deteriorate, and if the particle diameter is too small, the dispersibility of the super-engineering plastic polymer may deteriorate and agglomerate, which makes it difficult to achieve a uniform coating as a whole.

The particle diameter (D50) means a diameter at a point of n% in the cumulative distribution of the volume of particles relative to the diameter. That is, the D50 is the diameter at a point of 50% in the cumulative distribution of the volume of particles relative to the diameter.

The D50 can be measured by using a laser diffraction method. Specifically, the powder to be measured is dispersed in a dispersion medium, and then introduced into a commercially available laser diffraction particle size analyzer (e.g., Microtrac S3500). When the particles pass through the laser beam, the diffraction pattern difference according to the particle size is measured to calculate the particle size distribution. D50 can be measured by calculating the particle diameter corresponding a point of 50% in the cumulative distribution of the volume of particles relative to the particle diameter in the analyzer.

Furthermore, the ultra-engineering plastic polymer can be included in an amount of 60% by weight or more, and specifically 70% by weight or more, based on the total weight of the coating layer.

If the content of the super-engineering plastic polymer is less than 60% by weight outside the above range, the effect exhibited by the super-engineering plastic polymer cannot be sufficiently exhibited as described above, which is not preferable.

Meanwhile, in addition to the super-engineering plastic polymer, the coating layer may further comprise at least one selected from the group consisting of a polyvinylidene fluoride(PVDF) binder, a carboxymethylcellulose(CMC)-based binder, a polytetrafluoroethylene(PTFE)-based binder, a polyacrylonitrile(PAN)-based binder, and a polyethylene oxide (PEO)-based binder.

Since the binder is included in the coating layer, it can coat the super-engineering plastic polymer on the current collector and additionally secure an adhesive force with the separator during lamination, and thus, it may be used in combination with the super-engineering plastic polymer.

In order for the binder to have sufficient adhesive force, the super-engineering plastic polymer and the binder may be mixed in a ratio of 60:40 to 95:5, specifically in a ratio of 70:30 to 85:15, on a weight basis.

This coating layer may also have a thickness of 5 to 60% relative to the thickness of the positive electrode active material coating layer. Alternatively, it may specifically have a thickness of 3 to 30 *µ*m.

If the thickness of the coating layer is too thin outside the above range, the effect intended by the present disclosure cannot be sufficiently exhibited, and if the thickness is too thick, the high energy density desired by applying the single-sided positive electrode cannot be obtained, which is not preferable.

Further, the porosity of the coating layer may be 50% or less, specifically 10% to 50%, and more specifically 20% to 50%.

The porosity can be calculated by measuring the weight and thickness of the coating layer punched out in a certain area and then comparing it with the density of the material of each coating layer.

If the porosity is too large outside the above range, the bending improvement effect of the positive electrode may decrease, which is not preferable.

Meanwhile, in order to maximize the effect of the present disclosure while having a high energy density, most preferably, the electrode assembly may be configured such that single-sided positive electrodes may be formed on the whole of the outermost shells on the both sides of the stacking direction.

Further, a separator or separator film may be located on the outside of the single-sided positive electrode.

In this case, it is suitable for manufacturing a secondary battery having a high energy density.

Meanwhile, the electrode assembly may be a stack-folding type in which one or more unit cells selected from the group consisting of a mono-cell, a bi-cell, and a full-cell are folded with a sheet-type separation film such that a positive electrode and a negative electrode are alternately stacked.

Specifically, when substantially high energy densities are required, the use of stack-folding type electrode assemblies has recently increased.

Alternatively, the electrode assembly may be of a stack-lamination type in which the unit cells selected from the group consisting of a mono-cell, a bi-cell, and a full-cell are stacked such that the positive electrode and the negative electrode are alternately stacked, and a separator is located and laminated on the outermost shell.

In any case, the mono-cell means a structure composed of a positive electrode and a separator or a negative electrode and a separator, that is, a structure including only one electrode, the bi-cell means a structure in which electrodes of the same polarity are arranged in the outermost shells on both sides, while including a positive electrode, a negative electrode, and a separator, and the full-cell means a structure in which electrodes of different polarities are arranged on the outermost sells on both sides, while including a positive electrode, a negative electrode, and a separator.

Such mono-cells, bi-cells, or full-cells are stacked and folded such that a positive electrode and a negative electrode are alternately arranged, and a single-sided positive electrode according to the present disclosure is formed on the outermost shell, thereby producing the electrode assembly.

As one element constituting the unit cells, the positive electrode may have a structure in which a positive electrode active material layer is formed on at least one surface of a current collector, and the negative electrode may have a structure in which a negative electrode active material layer is formed on at least one surface of a current collector.

The current collector is generally formed to a thickness of 3 to 100 *µ*m. Such a current collector is not particularly limited as long as it has conductivity without causing chemical changes to the corresponding battery. For example, copper, stainless steel, aluminum, nickel, titanium, calcined carbon, copper or aluminum or stainless steel having a surface treated with carbon, nickel, titanium, silver, etc., aluminum-cadmium alloy, and the like can be used. In addition, irregularities are formed on the surface of the current collector to enhance the bonding strength of the electrode active material, and it can be used in various forms such as a film, a sheet, a foil, a net, a porous body, a foaming body, and a non-woven fabric structure. Specifically, the positive electrode may be made of aluminum, and the negative electrode may be made of copper.

The positive electrode active material layer may include a positive electrode active material, a conductive material, a binder, and the like, and the positive electrode active material layer may include a negative electrode active material, a conductive material, a binder, and the like.

The positive electrode active materials may include a layered compound such as lithium cobalt oxide (LiCoO₂), lithium nickel oxide (LiNiO₂), or a compound substituted with one or more transition metals; lithium manganese oxides such as chemical formulae Li₁₊ₓMn₂₋ₓO₄ (where x is 0 ~ 0.33), LiMnO₃, LiMn₂O₃, LiMnO₂; lithium copper oxide (Li₂CuO₂); vanadium oxides such as LiV₃O₈, LiV₃O₄, V₂O₅, and Cu₂V₂O₇; a Ni-site type lithium nickel oxide represented by chemical formula LiNi₁₋ₓMₓO₂ (where M=Co, Mn, Al, Cu, Fe, Mg, B or Ga, and x=0.01 ~ 0.3); lithium manganese composite oxide represented by chemical formulae LiMn₂₋ₓMₓO₂ (where M = Co, Ni, Fe, Cr, Zn or Ta, and x = 0.01 ~ 0.1) or Li₂Mn₃MO₈ (where, M = Fe, Co, Ni, Cu or Zn); lithium manganese composite oxide having a spinel structure represented by chemical formula LiNiₓMn₂₋ₓO₄; LiMn₂O₄ in which a part of Li in the chemical formula is substituted with an alkaline earth metal ion; disulfide compound; Fe₂(MoO₄)₃, or the like, but are not limited thereto.

The negative electrode active materials may include, for example, at least one carbon-based material selected from the group consisting of graphite, amorphous hard carbon, low crystalline soft carbon, carbon black, acetylene black, ketjen black, super P, graphene, and fibrous carbon, Si-based material, metal composite oxides such as LiₓFe₂O₃(0≤x≤1), LiₓWO₂(0≤x≤1), SnₓMe₁₋ₓMe'_{y}O_{z} (Me: Mn, Fe, Pb, Ge; Me': Al, B, P, Si, Group 1, 2, 3 elements in the periodic table, halogen; 0<x≤1; 1≤y≤3; 1≤z≤8); lithium metal; lithium alloys; silicon-based alloys; tin-based alloys; metal oxides such as SiO, SiO₂, SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; a conductive polymer such as polyacetylene; Li-Co-Ni based materials; titanium oxide; lithium titanium oxide, and the like.

The conductive material is not particularly limited as long as it has conductivity without causing a chemical change in the corresponding battery, and for example, carbon blacks such as carbon black, acetylene black, ketjen black, channel black, furnace black, lamp black, and thermal black; conductive fibers such as carbon fiber and metal fiber; metal powders such as carbon fluoride powder, aluminum powder, and nickel powder; conductive whiskey such as zinc oxide and potassium titanate; conductive metal oxides such as titanium oxide; conductive materials such as polyphenylene derivatives, and the like can be used.

The binder may be a type of binder known in the art, and for example, it may be at least one selected from the group consisting of polyvinylidene fluoride(PVdF), polyvinyl alcohol, carboxymethylcellulose(CMC), starch, hydroxypropyl cellulose, regenerated cellulose, polyvinylpyrrolidone, polytetrafluoroethylene, polyethylene, polypropylene, ethylene-propylene-diene terpolymer(EPDM), sulfonated EPDM, styrene-butadiene rubber(SBR), and fluororubber. Specifically, styrene-butadiene rubber (SBR), which can be used as an aqueous-based binder while having sufficient adhesive force by using with a negative electrode active material made of graphite-based material, can be used.

As the separator that is included in the unit cells and can be stacked on the outermost shell or the separation film that folds the unit cells, an insulating thin film having high ion permeability and mechanical strength is used. The pore diameter of the separator or the separation film is generally 0.01 to 10 *µ*m, and the thickness is generally 5 to 300 *µ*m. As such a separator, for example, olefin-based polymers such as chemical-resistant and hydrophobic polypropylene; a sheet or non-woven fabric made of glass fiber or polyethylene is used. When a solid electrolyte such as a polymer is used as the electrolyte, the solid electrolyte may also serve as a separator.

Meanwhile, according to another embodiment of the present disclosure, there is provided a secondary battery including the above-mentioned electrode assembly.

Other manufacturing methods and components of the secondary battery are known in the art, and therefore, the description thereof is omitted herein, which is included in the scope of the present disclosure.

Hereinafter, preferred embodiments of the present disclosure will be described in detail with reference to Examples, Comparison Examples and accompanying drawings.

### <Example 1> (including PVDF as a coating layer)

LiNi_{0.8}Co_{0.1}Mn_{0.1}O₂ as a positive electrode active material, carbon black, and PVDF were added in a ratio of 96:2:2 to NMP, and mixed to prepare a positive electrode slurry.

PEEK (Solvay) and PVDF were mixed in a weight ratio of 7:3 with NMP to prepare a coating layer solution.

The positive electrode slurry was applied to one surface of a current collector made of aluminum foil having a thickness of 15 *µ*m, dried, applied in a thickness of 110 *µ*m, and the coating layer solution was applied to the other surface of the current collector, and then dried and formed into a thickness of 15 *µ*m. At this time, the porosity of the coating layer was 45%.

### <Example 2>

A positive electrode was manufactured in the same manner as in Example 1, except that as the coating layer, PEEK and PVDF was used in a weight ratio of 8:2.

### <Example 3>

A positive electrode was manufactured in the same manner as in Example 1, except that the thickness of the coating layer is 30 *µ*m.

### <Example 4>

A positive electrode was manufactured in the same manner as in Example 1, except that as the coating layer, PPS and PVDF were used in a weight ratio of 7:3.

### <Comparative Example 1>

A positive electrode was manufactured in the same manner as in Example 1, except that no separate coating layer was applied.

### <Comparative Example 2>

A positive electrode was manufactured in the same manner as in Example 2, except that no separate coating layer was applied.

### <Comparative Example 3>

A positive electrode was manufactured in the same manner as in Example 1, except that the PVDF material was applied alone to the coating layer.

### <Comparative Example 4>

A positive electrode was manufactured in the same manner as in Example 2, except that the PVDF material was applied alone to the coating layer.

### <Example 5>

A positive electrode was manufactured in the same manner as in Example 1, except that as the coating layer, PEEK and PVDF were used in a weight ratio of 5:5.

### <Experimental Example 5>

The adhesive forces of the negative electrodes manufactured in Comparative Examples 1 to 4 and Examples 1 to 5 and the separators were measured, and the results are shown in Table 1 below.

The continuous adhesive force was measured as follows. The coating layer of the positive electrode was placed on the separator so as to abut on the separator, and was passed through a laminator (Supernex-synC325, speed: 9 levels) at room temperature, and then punched out into 20mm x 150mm, and was pulled at 100 mm/min using a UTM (from TA Instruments) device to measure the force of being peeled from the electrode. At this time, the separation angle between the separator and the positive electrode was 90°.

**[Table 1]**

| | Adhesive force (kgf/2cm) |
|---|---|
| Example 1 | 41 |
| Example 2 | 38 |
| Example 3 | 42 |
| Example 4 | 40 |
| Comparative Example 1 | 5 |
| Comparative Example 2 | 5 |
| Comparative Example 3 | 45 |
| Comparative Example 4 | 45 |
| Example 5 | 43 |

Referring to Table 1, it can be seen that when a coating layer is formed on one surface of the single-sided positive electrode, the adhesive force with the separator is significantly increased. It can be expected therefrom that the coating layer can effectively act to improve processability.

### <Experimental Example 2> (Bending Experiment)

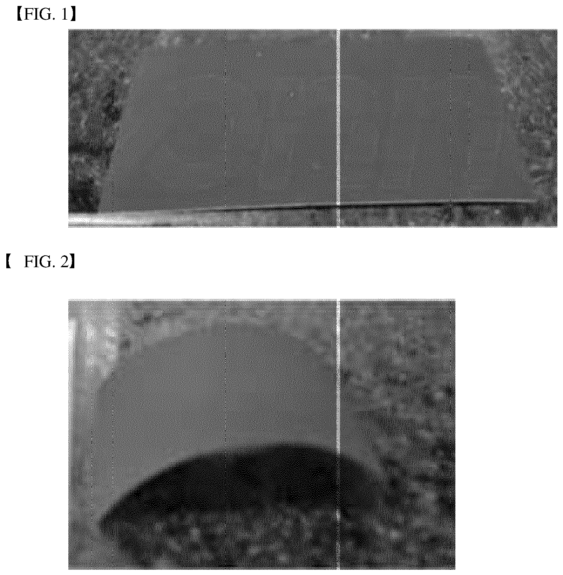

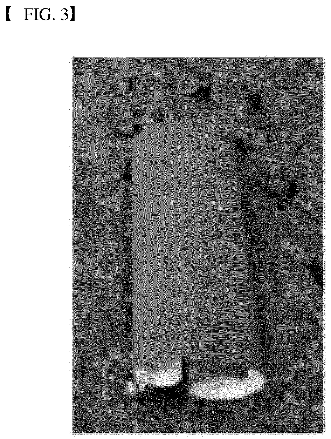

The positive electrodes manufactured in Comparative Examples 1 to 4 and Examples 1 to 5 were punched into a certain size (65x40.5mm), and then roll-pressed to calculate the amount of change in thickness and the amount of change in overall width, which are listed in Table 2 below. The photographs of the positive electrodes of Example 1, Comparative Example 1, and Comparative Example 3 after rolling are shown in Figs. 1 to 3.

**[Table 2]**

| | Amount of change in thickness (%) (1-thickness after rolling/thickness before rolling) x 100 | Amount of change in overall width (%) (1-width after rolling/width before rolling) x100 |
|---|---|---|
| Example 1 | 14.9 | 0.3 |
| Example 2 | 16.1 | 2.3 |
| Example 3 | 27.9 | 0.8 |
| Example 4 | 16.4 | 0.8 |
| Comparative Example 1 | 7.2 | 13.8 |
| Comparative Example 2 | 9.8 | 52.3 |
| Comparative Example 3 | 8.1 | 66.2 |
| Comparative Example 4 | 4.3 | 81.5 |
| Example 5 | 15.7 | 8.5 |

As shown in Table 2 and Figs. 1 to 3, as the multi-sided positive electrode is rolled and the thickness becomes thinner, the bending phenomenon occurs greatly, but when applying a particulate super-engineering polymer coating layer, the bending hardly occurs, and it is also effective even in the case of Example 3 in which the thickness change amount is 27% or more. On the other hand, in the case of Comparative Examples 3 and 4 in which general polymers are simply applied, the bending rather increases even with weak strength.

On the other hand, considering Examples 1 and 5, it can be seen that the bending effect decreases as the content of the binder increases and the content of the particulate super-engineering polymer coating layer decreases. Therefore, it is preferable to adjust the content appropriately.

Although the exemplary embodiments of the present disclosure have been disclosed for illustrative purposes, those skilled in the art will appreciate that various modifications, additions and substitutions are possible, without departing from the scope defined in the accompanying claims.

### [Industrial Applicability]

The electrode assembly for a lithium secondary battery according to the present invention has the effect of improving the bending of the single-sided positive electrode and the adhesive force with the outermost separator or separator film because a coating layer containing a particulate super-engineering plastic polymer is formed on the other surface of a current collector of a single-sided positive electrode that does not face the other electrode on the outermost side.

## Claims

1. An electrode assembly for a lithium secondary battery, in which:
at least one electrode located at the outermost shell of the electrode assembly is a single-sided positive electrode where an active material coating layer is formed only on one surface of a current collector facing an inner electrode with a separator being interposed therebetween, and
a coating layer containing 60% by weight or more of particulate super-engineering plastic polymer is formed on the other surface of the current collector of the single-sided positive electrode.

2. The electrode assembly according to claim 1, wherein:
the super-engineering plastic polymer is at least one selected from the group consisting of polyetheretherketone(PEEK), polyphenylene sulfide(PPS), polyetherimide(PEI), polyethersulfone(PES), polyarylsulfone(PSU), polyamide-imide(PAI), polycarbonate(PC), polyphenylsulfone(PPSU) and polyimide(PI).

3. The electrode assembly according to claim 1, wherein:
the super-engineering plastic polymer has an average particle diameter (D50) of 50 nm to 20 *µ*m.

4. The electrode assembly according to claim 1, wherein:
the coating layer contains 70% by weight or more of the super-engineering plastic polymer.

5. The electrode assembly according to claim 1, wherein:
the coating layer further comprises at least one selected from the group consisting of a polyvinylidene fluoride(PVDF) binder, a carboxymethylcellulose(CMC)-based binder, a polytetrafluoroethylene(PTFE)-based binder, a polyacrylonitrile(PAN)-based binder, and a polyethylene oxide (PEO)-based binder.

6. The electrode assembly according to claim 5, wherein:
the super-engineering plastic polymer and the binder are mixed in a ratio of 60:40 to 95:5 on a weight basis.

7. The electrode assembly according to claim 5, wherein:
the super-engineering plastic polymer and the binder are mixed in a ratio of 70:30 to 85:15 on a weight basis.

8. The electrode assembly according to claim 1, wherein:
the coating layer has a thickness of 5 to 60% relative to the thickness of the positive electrode active material coating layer.

9. The electrode assembly according to claim 1, wherein:
the electrode assembly is configured such that the single-sided positive electrode is formed on the whole of the outermost shells on both sides of the stacking direction.

10. The electrode assembly according to claim 1, wherein:
a separator or a separation film is located on the outside of the single-sided positive electrode.

11. The electrode assembly according to claim 1, wherein:
the electrode assembly is of a stack-folding type in which one or more unit cells selected from the group consisting of a mono-cell, a bi-cell, and a full-cell are folded with a sheet-type separation film such that a positive electrode and a negative electrode are alternately stacked.

12. The electrode assembly according to claim 1, wherein:
the electrode assembly is of a stack-lamination type in which the unit cells selected from the group consisting of a mono-cell, a bi-cell, and a full-cell **are stacked such that** the positive electrode and the negative electrode are alternately stacked, and a separator is located and laminated on the outermost shell.

13. A secondary battery comprising the electrode assembly as set forth in claim 1.

## Patentansprüche

1. Elektrodenanordnung für eine Lithium-Sekundärbatterie, worin
mindestens eine an der äußersten Hülle der Elektrodenanordnung angeordnete Elektrode eine einseitige positive Elektrode ist, bei der eine Aktivmaterial-Beschichtung nur auf einer Fläche eines Stromkollektors ausgebildet ist, die einer inneren Elektrode mit einem dazwischen angeordneten Separator zugewandt ist, und
eine Beschichtung, die 60 Gew.-% oder mehr eines teilchenförmigen Super-Engineering-Kunststoffpolymers enthält, auf der anderen Fläche des Stromkollektors der einseitigen positiven Elektrode ausgebildet ist.

2. Elektrodenanordnung nach Anspruch 1, wobei
das Super-Engineering-Kunststoffpolymer mindestens eines ist, das aus der Gruppe ausgewählt ist, die aus Polyetheretherketon (PEEK), Polyphenylensulfid (PPS), Polyetherimid (PEI), Polyethersulfon (PES), Polyarylsulfon (PSU), Polyamid-Imid (PAI), Polycarbonat (PC), Polyphenylsulfon (PPSU) und Polyimid (PI) besteht.

3. Elektrodenanordnung nach Anspruch 1, wobei
das Super-Engineering-Kunststoffpolymer einen mittleren Partikeldurchmesser (D50) von 50 nm bis 20 µm aufweist.

4. Elektrodenanordnung nach Anspruch 1, wobei
die Beschichtung 70 Gew.-% oder mehr des Super-Engineering-Kunststoffpolymers enthält.

5. Elektrodenanordnung nach Anspruch 1, wobei
die Beschichtung ferner mindestens eines umfasst, das aus der Gruppe ausgewählt ist, die aus einem Bindemittel auf Basis von Polyvinylidenfluorid (PVDF), einem Bindemittel auf Carboxymethylcellulose (CMC)-Basis, einem Bindemittel auf Polytetrafluorethylen (PTFE)-Basis, einem Bindemittel auf Polyacrylnitril (PAN)-Basis und einem Bindemittel auf Polyethylenoxid (PEO)-Basis besteht.

6. Elektrodenanordnung nach Anspruch 5, wobei
das Super-Engineering-Kunststoffpolymer und das Bindemittel in einem Verhältnis von 60:40 bis 95:5 auf Gewichtsbasis gemischt sind.

7. Elektrodenanordnung nach Anspruch 5, wobei
das Super-Engineering-Kunststoffpolymer und das Bindemittel in einem Verhältnis von 70:30 bis 85:15 auf Gewichtsbasis gemischt sind.

8. Elektrodenanordnung nach Anspruch 1, wobei
die Beschichtung eine Dicke von 5 bis 60 % bezogen auf die Dicke der Aktivmaterial-Beschichtung der positiven Elektrode aufweist.

9. Elektrodenanordnung nach Anspruch 1, wobei
die Elektrodenanordnung so ausgelegt ist, dass die einseitige positive Elektrode auf der Gesamtheit der äußersten Hüllen auf beiden Seiten der Stapelrichtung ausgebildet ist.

10. Elektrodenanordnung nach Anspruch 1, wobei
ein Separator oder ein Trennfilm an der Außenseite der einseitigen positiven Elektrode angeordnet ist.

11. Elektrodenanordnung nach Anspruch 1, wobei
die Elektrodenanordnung von einem Stapel-Falt-Typ ist, bei dem eine oder mehrere Einheitszellen, ausgewählt aus der Gruppe bestehend aus einer Monozelle, einer Bizelle und einer Vollzelle, mit einem folienartigen Trennfilm so gefaltet sind, dass eine positive Elektrode und eine negative Elektrode abwechselnd gestapelt sind.

12. Elektrodenanordnung nach Anspruch 1, wobei
die Elektrodenanordnung von einem Stapel-Laminierungs-Typ ist, bei dem die Einheitszellen, ausgewählt aus der Gruppe bestehend aus einer Monozelle, einer Bizelle und einer Vollzelle, **derart gestapelt sind, dass** die positive Elektrode und die negative Elektrode abwechselnd gestapelt sind, und ein Separator auf der äußersten Hülle angeordnet und laminiert ist.

13. Sekundärbatterie, umfassend die Elektrodenanordnung nach Anspruch 1.

## Revendications

1. Ensemble d'électrodes pour une batterie secondaire au lithium, dans lequel:
au moins une électrode située sur l'enveloppe la plus externe de l'ensemble d'électrodes est une électrode positive simple face où une couche de revêtement de matériau actif est formée uniquement sur une surface d'un collecteur de courant faisant face à une électrode interne avec un séparateur interposé entre elles, et
une couche de revêtement contenant 60 % en poids ou plus d'un polymère plastique de super-ingénierie particulaire est formée sur l'autre surface du collecteur de courant de l'électrode positive simple face.

2. L'ensemble d'électrodes selon la revendication 1, dans lequel:
le polymère plastique de super-ingénierie est au moins un choisi dans le groupe constitué par la polyétheréthercétone (PEEK), le sulfure de polyphénylène (PPS), le polyétherimide (PEI), la polyéthersulfone (PES), la polyarylsulfone (PSU), le polyamide-imide (PAI), le polycarbonate (PC), la polyphénylsulfone (PPSU) et le polyimide (PI).

3. L'ensemble d'électrodes selon la revendication 1, dans lequel: le polymère plastique de super-ingénierie a un diamètre de particule moyen (D50) de 50 nm à 20 µm.

4. L'ensemble d'électrodes selon la revendication 1, dans lequel: la couche de revêtement contient 70 % en poids ou plus du polymère plastique de super-ingénierie.

5. L'ensemble d'électrodes selon la revendication 1, dans lequel: la couche de revêtement comprend en outre au moins un choisi dans le groupe constitué par un liant à base de polyfluorure de vinylidène (PVDF), un liant à base de carboxyméthylcellulose (CMC), un liant à base de polytétrafluoroéthylène (PTFE), un liant à base de polyacrylonitrile (PAN), et un liant à base de poly(oxyde d'éthylène) (PEO).

6. L'ensemble d'électrodes selon la revendication 5, dans lequel: le polymère plastique de super-ingénierie et le liant sont mélangés dans un rapport de 60:40 à 95:5 en poids.

7. L'ensemble d'électrodes selon la revendication 5, dans lequel: le polymère plastique de super-ingénierie et le liant sont mélangés dans un rapport de 70:30 à 85:15 en poids.

8. L'ensemble d'électrodes selon la revendication 1, dans lequel: la couche de revêtement a une épaisseur de 5 à 60 % par rapport à l'épaisseur de la couche de revêtement de matériau actif de l'électrode positive.

9. L'ensemble d'électrodes selon la revendication 1, dans lequel: l'ensemble d'électrodes est configuré de telle sorte que l'électrode positive simple face est formée sur la totalité des enveloppes les plus externes des deux côtés du sens d'empilement.

10. L'ensemble d'électrodes selon la revendication 1, dans lequel: un séparateur ou un film de séparation est situé à l'extérieur de l'électrode positive simple face.

11. L'ensemble d'électrodes selon la revendication 1, dans lequel: l'ensemble d'électrodes est d'un type à empilement-pliage dans lequel une ou plusieurs cellules unitaires choisies dans le groupe constitué par une monocellule, une bicellule, et une cellule complète sont pliées avec un film de séparation de type feuille de telle sorte qu'une électrode positive et une électrode négative sont empilées en alternance.

12. L'ensemble d'électrodes selon la revendication 1, dans lequel : l'ensemble d'électrodes est d'un type à empilement-lamination dans lequel les cellules unitaires choisies dans le groupe constitué par une monocellule, une bicellule, et une cellule complète **sont empilées de telle sorte que** l'électrode positive et l'électrode négative sont empilées en alternance, et un séparateur est situé et laminé sur l'enveloppe la plus externe.

13. Batterie secondaire comprenant l'ensemble d'électrodes tel que défini dans la revendication 1.
